(19) Europäisches Patentamt
European Patent Office
Office européen des brevets

(11) **EP 4 654 492 A1**

(12) **EUROPEAN PATENT APPLICATION**
published in accordance with Art. 153(4) EPC

(43) Date of publication:
26.11.2025  Bulletin 2025/48

(21) Application number: 23916832.1

(22) Date of filing: 20.01.2023

(51) International Patent Classification (IPC):
**H04B 7/22** (2006.01)  **H04W 72/00** (2023.01)

(52) Cooperative Patent Classification (CPC):
**H04B 7/22; H04W 72/00**

(86) International application number:
**PCT/CN2023/073372**

(87) International publication number:
**WO 2024/152354 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **WANG, Shukun
Dongguan, Guangdong 523860 (CN)**
• **XU, Weijie
Dongguan, Guangdong 523860 (CN)**
• **SHI, Cong
Dongguan, Guangdong 523860 (CN)**

(74) Representative: **Penza, Giancarlo
Bugnion S.p.A.
Viale Lancetti, 17
20158 Milano (IT)**

(54) **COMMUNICATION METHOD AND APPARATUS, TERMINAL DEVICE, AND NETWORK DEVICE**

(57)    Embodiments of the present application provide a communication method and apparatus, a terminal device, and a network device. The method comprises: receiving, by a terminal device, a first signal sent by a network device and sending, by the terminal device, a second signal to the network device, wherein, the second signal is a backscatter signal of the first signal, a channel where the second signal is located satisfies a first constraint, and/or a time domain position where the second signal is located satisfies a second constraint.

A network device transmits a first signal to a terminal device, and the terminal device receives the first signal from the network device — 1201

The terminal device transmits a second signal to the network device, and the network device receives the second signal from the terminal device, the second signal being a backscattered signal of the first signal, a channel in which the second signal is located satisfies a first constraint, and/or a time domain position in which the second signal is located satisfies a second constraint — 1202

**FIG. 12**

**Description**

TECHNICAL FIELD

Embodiments of the disclosure relate to the technical field of mobile communications, and particularly to a communication method and apparatus, a terminal device and a network device.

BACKGROUND

A zero-power terminal is required to harvest radio waves to obtain power, before it may be driven to operate. Therefore, before obtaining the power, the zero-power terminal is in a "power-off" state, in which the zero-power terminal cannot transmit or receive a signal. When a plurality of channels are deployed in a network, the zero-power terminal may operate in any of the plurality of channels after obtaining the power and being "activated", but a network device generally communicates with the zero-power terminal only in one of the plurality of channels.

When the network device transmits a downlink signal, the network device may also receive a backscattered signal from the zero-power terminal at the same time, which may cause a self-interference problem of the network device. Specifically, the downlink transmission from the network device may interfere with the reception of the backscattered signal by the network device. It is a key issue for a zero-power communication system to avoid this self-interference.

SUMMARY

The embodiments of the disclosure provide a communication method and apparatus, a terminal device, a network device, a chip, a computer-readable storage medium, a computer program product and a computer program.

A communication method is provided in an embodiment of the disclosure, and the communication method includes the following operations.

A terminal device receives a first signal from a network device, and transmits a second signal to the network device, the second signal being a backscattered signal of the first signal. A channel in which the second signal is located satisfies a first constraint, and/or a time domain position in which the second signal is located satisfies a second constraint.

A communication method is provided in an embodiment of the disclosure, and the communication method includes the following operations.

A network device transmits a first signal to a terminal device, and receives a second signal from the terminal device, the second signal being a backscattered signal of the first signal. A channel in which the second signal is located satisfies a first constraint, and/or a time domain position in which the second signal is located satisfies a second constraint.

A communication apparatus is provided in an embodiment of the disclosure, the communication apparatus is applied to a terminal device in a zero-power communication system and includes a receiving unit and a transmitting unit.

The receiving unit is configured to receive a first signal from a network device.

The transmitting unit is configured to transmit a second signal to the network device, the second signal being a backscattered signal of the first signal.

A channel in which the second signal is located satisfies a first constraint, and/or a time domain position in which the second signal is located satisfies a second constraint.

A communication apparatus is provided in an embodiment of the disclosure, the communication apparatus is applied to a network device in a zero-power communication system and includes a transmitting unit and a receiving unit.

The transmitting unit is configured to transmit a first signal to a terminal device.

The receiving unit is configured to receive a second signal from the terminal device, the second signal being a backscattered signal of the first signal.

A channel in which the second signal is located satisfies a first constraint, and/or a time domain position in which the second signal is located satisfies a second constraint.

A terminal device is provided in an embodiment of the disclosure, and the terminal device includes a processor and a memory. The memory is configured to store a computer program, and the processor is configured to call the computer program stored in the memory and run the computer program to perform the above communication method.

A network device is provided in an embodiment of the disclosure, and the network device includes a processor and a memory. The memory is configured to store a computer program, and the processor is configured to call the computer program stored in the memory and run the computer program to perform the above communication method.

A chip is provided in an embodiment of the disclosure, and the chip is configured to implement the above communication methods.

Specifically, the chip includes a processor, and the processor is configured to call a computer program from a memory and run the computer program, to cause a device mounted with the chip to perform the above communication methods.

A computer-readable storage medium is provided in an embodiment of the disclosure. The computer-readable storage medium has stored thereon a computer program that causes a computer to perform the above communication methods.

A computer program product is provided in an embodiment of the disclosure, and the computer program product includes computer program instructions that cause a computer to perform the above communication methods.

A computer program is provided in an embodiment of the disclosure, which causes a computer to perform the above communication methods when it is run on the computer.

In the technical solution of the embodiments of the disclosure, the terminal device transmits the backscattered signal through the channel satisfying the first constraint and/or the time domain position satisfying the second constraint. Therefore, the self-interference problem caused by the backscattered signal to the network device can be avoided, a reliability of the backscattering communication can be improved, and a robustness of performance of a backscattering communication system can be improved.

BRIEF DESCRIPTION OF THE DRAWINGS

The accompanying drawings, which are illustrated herein, provide further understanding of the disclosure and constitute a part of this disclosure. The exemplary embodiments of the disclosure and their description are used to explain the disclosure and not intended to unduly limit the disclosure.

FIG. 1 is a schematic diagram of a zero-power communication according to an embodiment of the disclosure.

FIG. 2 is a schematic diagram of power harvesting according to an embodiment of the disclosure.

FIG. 3 is a schematic diagram of a backscattering communication according to an embodiment of the disclosure.

FIG. 4 is a schematic diagram of a circuit for resistive load modulation according to an embodiment of the disclosure.

FIG. 5 is a schematic diagram of a non-return-to-zero coding according to an embodiment of the disclosure.

FIG. 6 is a schematic diagram of a Manchester coding according to an embodiment of the disclosure.

FIG. 7 is a schematic diagram of a unipolar return-to-zero coding according to an embodiment of the disclosure.

FIG. 8 is a schematic diagram of a differential biphase coding according to an embodiment of the disclosure.

FIG. 9 is a schematic diagram of a Miller coding according to an embodiment of the disclosure.

FIG. 10 is a schematic diagram of a frequency position of a power sourcing channel according to an embodiment of the disclosure.

FIG. 11 is a schematic diagram of a self-interference according to an embodiment of the disclosure.

FIG. 12 is a schematic flowchart of a communication method according to an embodiment of the disclosure.

FIG. 13 is a schematic diagram of a channel pattern deployed by a network according to an embodiment of the disclosure.

FIG. 14 is a schematic diagram of a time domain avoidance according to an embodiment of the disclosure.

FIG. 15 is a schematic diagram of a time-frequency domain avoidance according to an embodiment of the disclosure.

FIG. 16 is a first schematic diagram of a structural composition of a communication apparatus according to an embodiment of the disclosure.

FIG. 17 is a second schematic diagram of a structural composition of a communication apparatus according to an embodiment of the disclosure.

FIG. 18 is a schematic structural diagram of a communication device according to an embodiment of the disclosure.

FIG. 19 is a schematic structural diagram of a chip according to an embodiment of the disclosure.

FIG. 20 is a schematic block diagram of a communication system according to an embodiment of the disclosure.

DETAILED DESCRIPTION

For convenience of understanding the technical solutions in the embodiments of the disclosure, technologies related to the embodiments of the disclosure are described below. The following related technologies, used as optional solutions, may be combined with the technical solution in the embodiments of the disclosure in various ways, and such combinations fall within the scope of protection of the embodiments of the disclosure.

Principle of Zero-Power Communication Technology

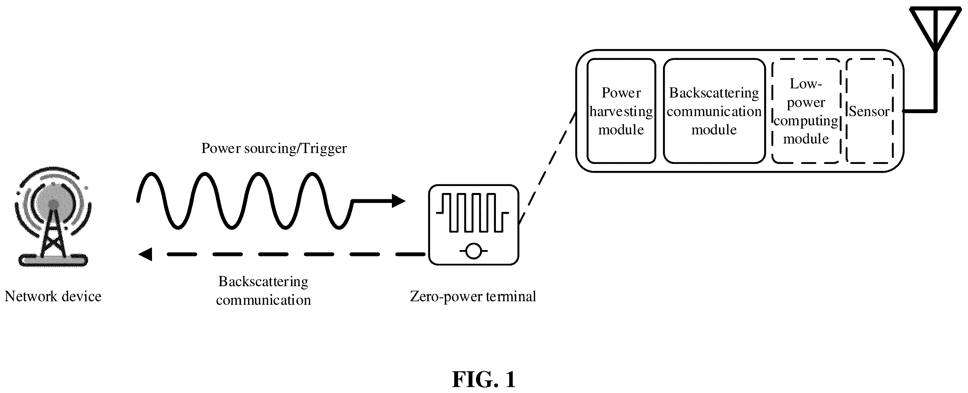

Power harvesting and backscattering communication technologies are used in the zero-power communication. As illustrated in FIG. 1, a zero-power communication system includes a network device and a zero-power terminal. The network device is configured to transmit a power sourcing signal (i.e., a radio wave) and a downlink communication signal to the zero-power terminal, and further to receive a backscattered signal from the zero-power terminal. As an example, the zero-power terminal includes a power harvesting module, a backscattering communication module, and a low-power computing module. In addition, the zero-power terminal may also include a memory and/or a sensor. The memory is configured to store some basic information (such as an item identification), and the sensor is configured to obtain sensing data such as an ambient temperature and an ambient humidity.

Key technologies in the zero-power communication are further described below.

(1) Power Harvesting

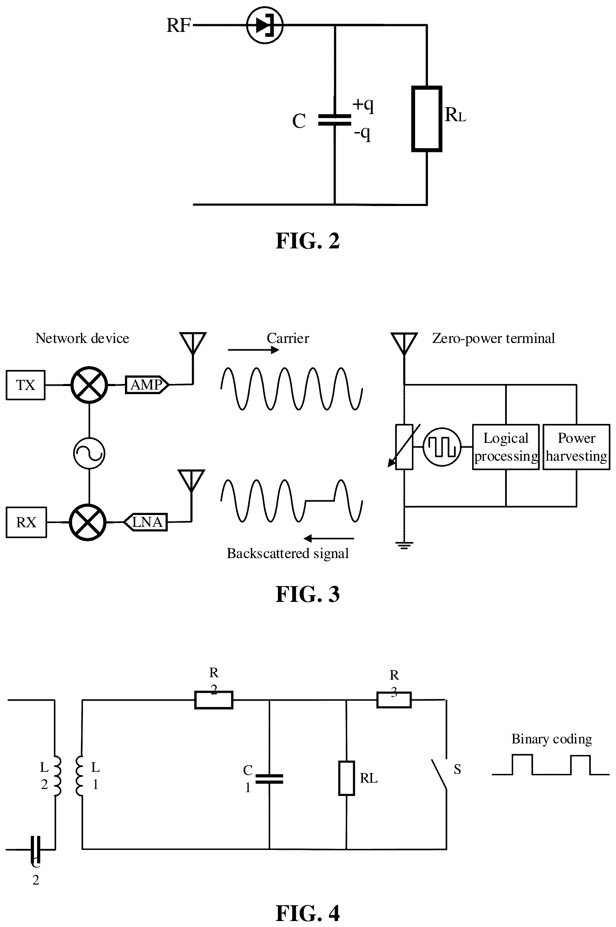

FIG. 2 is a schematic diagram of the power harvesting. As illustrated in FIG. 2, the power harvesting module is configured to harvest power of a spatial electromagnetic wave based on a principle of electromagnetic induction, to obtain the power required to drive the zero-power terminal to operate, so as to drive a load circuit (for example, to drive the low-power computing module, the sensor and so on). Therefore, the zero-power terminal does not require a traditional battery, thereby realizing a battery-free communication.

As an example, the power harvesting module refers to a radio-frequency power harvesting module. The radio-frequency power harvesting module may harvest the power carried by radio waves in space, thereby realizing the power harvesting from the spatial electromagnetic waves.

(2) Backscattering Communication

FIG. 3 is a schematic diagram of the backscattering communication. As illustrated in FIG. 3, the zero-power terminal receives a wireless signal (i.e., a carrier illustrated in FIG. 3) from the network device, modulates the wireless signal (i.e., loading information to be transmitted in the wireless signal), and radiates the modulated signal through an antenna. This process of information transmission is referred to as the backscattering communication.

The backscattering communication is closely associated with a load modulation function, and the load modulation is a common approach used by the zero-power terminal to load information. The load modulation process is implemented by adjusting and controlling, based on beats of a data stream, a circuit parameter of an oscillation loop of the zero-power terminal, so that a magnitude and/or a phase of an impedance of the zero-power terminal are changed accordingly. The load modulation technology mainly includes a resistive load modulation and a capacitive load modulation.

As illustrated in FIG. 4, in the resistive load modulation, a load is connected in parallel with a resistor, and the resistor is referred to as a load modulation resistor. The resistor is controlled to be connected or disconnected based on a binary data stream. The connection or disconnection of the resistor may cause a change in a circuit voltage, so as to realize an amplitude shift keying (ASK). That is, the signal modulation is achieved by adjusting the amplitude of the backscattered signal from the zero-power terminal. Similarly, in the capacitive load modulation, the load is connected in parallel with a capacitor, and the capacitor is referred to as a load modulation capacitor. The capacitor replaces the load modulation resistor in FIG. 4. The connection or disconnection of the capacitor causes a change in a resonance frequency of the circuit, thereby realizing a frequency shift keying (FSK). That is, the signal modulation is achieved by adjusting an operating frequency of the backscattered signal from the zero-power terminal.

Accordingly, the zero-power terminal may implement the backscattering communication process through the information modulation on the received signal by means of the load modulation. As a result, the zero-power terminal has the following significant advantages. On one hand, since the zero-power terminal does not actively transmit a signal, the zero-power terminal does not require a complex radio frequency link, such as a power amplifier, a radio frequency filter, and the like. On the other hand, the zero-power terminal does not need to actively generate a high-frequency signal, and thus does not require a high-frequency crystal oscillator. On the other hand, with the backscattering communication, the transmission process of the zero-power terminal is not required to consume the power of the zero-power terminal itself.

(3) Power Sourcing Signal and Trigger Signal in Zero-Power Communication System

Power Sourcing Signal

The power sourcing signal is used for providing the power to the zero-power device.

In terms of a carrier of the power sourcing signal, a transmitting end for the power sourcing signal may be a base station, an intelligent gateway, a charging station, a micro base station, a smart phone, or the like.

In terms of a frequency band of the power sourcing signal, the frequency band of a radio wave used as the power sourcing signal may be a low frequency, a medium frequency, a high frequency, or the like.

In terms of a waveform of the power sourcing signal, the waveform of the radio wave used as the power sourcing signal may be a sine wave, a square wave, a triangular wave, a pulse, a rectangular wave, or the like.

In addition, the power sourcing signal may be a continuous wave or a discontinuous wave (i.e., with a certain amount of time interruption that is allowed).

The power sourcing signal may be, but is not limited to, a physical signal specified in the 3rd Generation Partnership Project (3GPP) standards, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), or the like. However, the power sourcing signal is not limited thereto, and may also be a new type of signal.

Trigger Signal

The trigger signal is used for triggering communication of the zero-power device, in other words, the trigger signal is used for scheduling the zero-power device.

In terms of a carrier of the trigger signal, a transmitting end for the trigger signal may be a base station, an intelligent gateway, a charging station, a micro base station, a smart phone, or the like.

In terms of a frequency band of the trigger signal, the frequency band of a radio wave used as the trigger signal may be a low frequency, a medium frequency, a high frequency, or the like.

In terms of a waveform of the trigger signal, the waveform of the radio wave used as the trigger signal may be a sine wave, a square wave, a triangular wave, a pulse, a rectangular wave, or the like.

In addition, the trigger signal may be a continuous wave or a discontinuous wave (i.e., with a certain amount of time interruption that is allowed).

The trigger signal may be, but is not limited to, a certain physical signal specified in the 3GPP standards, such as an SRS, a PUSCH, a PRACH, a PUCCH, a PDCCH, a PDSCH, a PBCH, or the like. However, the trigger signal is not limited thereto, and may also be a new type of signal.

Coding Methods for Zero-power Communication

For data transmitted by the zero-power terminal, different forms of codes may be used for representing binary "1" and "0". Typically, one of the following coding methods may be used by a radio frequency identification system: non-return-to-zero (NRZ) coding, Manchester coding, unipolar return-to-zero (Unipolar RZ) coding, differential bi-phase (DBP) coding, Miller coding, and differential coding. Different forms of codes are used for representing the binary "1" and "0", which may also be understood as using different pulse signals to represent 0 and 1. The several coding methods will be described below.

(1) NRZ coding

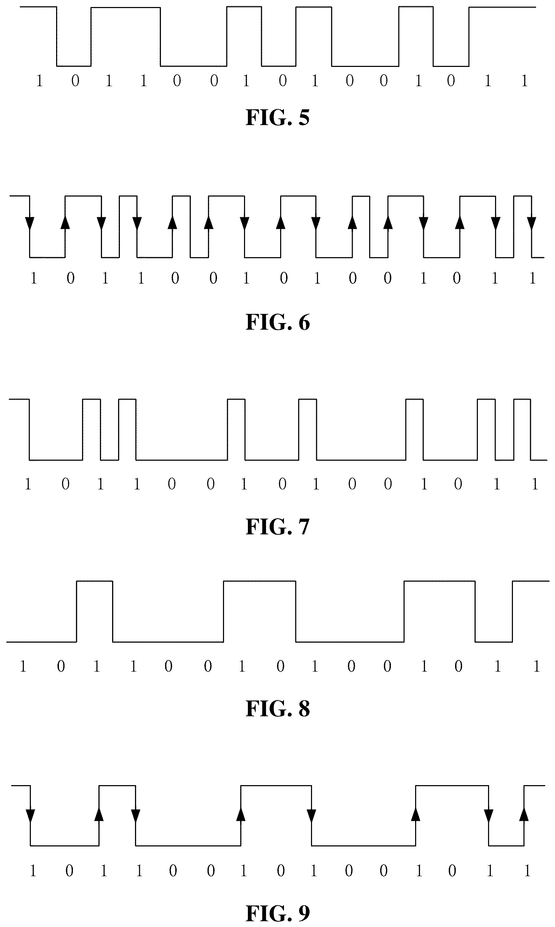

As illustrated in FIG. 5, in the NRZ coding, a high level is used for representing the binary "1" and a low level is used for representing the binary "0".

(2) Manchester coding

Manchester coding is also known as split-phase coding. In the Manchester coding, a value of a certain bit is represented by a change (rising/falling) in a level at half a bit period within a bit length. As illustrated in FIG. 6, a negative transition at half a bit period represents the binary "1", and a positive transition at half a bit period represents the binary "0".

When applying the load modulation or backscattering modulation on a carrier, the Manchester coding is generally used for data transmission from the zero-power terminal to the network device, which is conducive to detecting errors in the data transmission. This is because an "unchanged" state is not allowed within the bit length. When data bits transmitted simultaneously by a plurality of zero-power terminals have different values, a rising edge and a falling edge of reception may cancel each other out, resulting in an uninterrupted carrier signal over the entire bit length. Since the unchanged state is not allowed, the network device may use the error to determine a specific location where a collision occurs.

(3) Unipolar RZ coding

In the unipolar RZ coding, as illustrated in FIG. 7, a high level in a first half a bit period represents the binary "1", and a low level signal lasting for the entire bit period represents the binary "0". The unipolar RZ coding may be used for extracting bit-synchronized signals.

(4) Differential bi-phase coding

In the differential bi-phase coding, as illustrated in FIG. 8, any edge in half a bit period represents the binary "0", and absence of an edge represents the binary "1". Furthermore, at the beginning of each bit period, the level is inverted. Therefore, a bit beat is relatively easy to be reconstructed for a receiving end.

(5) Miller coding

In the Miller coding, as illustrated in FIG. 9, any edge within half a bit period represents the binary "1", and a level that remains unchanged over a next bit period represents the binary "0". There is a level alternation at the beginning of the bit period. Therefore, the bit beat is relatively easy to be reconstructed for the receiver.

(6) Differential coding

In the differential coding, each binary "1" to be transmitted causes a change in the signal level, and the signal level remains unchanged for the binary "0".

Classification of Zero-power Terminals

The zero-power terminals may be classified into the following types based on power sources and usage modes of the zero-power terminals.

(1) Passive zero-power terminal

Such type of zero-power terminal does not require a built-in battery. When the zero-power terminal approaches the network device, the zero-power terminal is in a near-field range formed by antenna radiation of the network device. Therefore, an induced current is generated by the antenna of the zero-power terminal through the electromagnetic induction, and the induced current drives the low-power computing module (i.e., a low-power chip circuit) of the zero-power terminal to operate, so as to realize demodulation of a forward link signal and modulation of a backward link signal and so on. For a backscattering link, the backscattering is used by the zero-power terminal for the signal transmission.

Accordingly, no built-in battery is needed to drive the passive zero-power terminal either in the forward link or the reverse link, which is a zero-power terminal in the true sense.

Since the passive zero-power terminal does not require the battery, a radio-frequency circuit and a baseband circuit of the passive zero-power terminal are very simple. For example, a low noise amplifier (LNA), a power amplifier (PA), a crystal oscillator, an analog-to-digital converter (ADC) and the like are not required, so that the passive zero-power terminal has many advantages, such as a small size, a light weight, a low price and a long service life.

(2) Semi-passive zero-power terminal

The semi-passive zero-power terminal is not equipped with a conventional battery, but it may use a power harvesting module to harvest the power from the radio wave and further store the harvested power in a power storage unit (such as a capacitor). After obtaining the power, the power storage unit may drive the low-power computing module (i.e., the low-power chip circuit) of the zero-power terminal to operate, so as to realize the demodulation of the forward link signal and the modulation of the backward link signal and so on. For the backscattering link, the backscattering is used by the zero-power terminal for the signal transmission.

Accordingly, no built-in battery is needed to drive the semi-passive zero-power terminal either in the forward link or the reverse link. Although the power stored in the capacitor is used during the operation, the power is sourced from the power of the radio waves harvested by the power harvesting module, which is also a zero-power terminal in the true sense.

The semi-passive zero-power terminal inherits many advantages of the passive zero-power terminal, so that the semi-passive zero-power terminal has many advantages, such as a small size, a light weight, a low price and a long service life.

(3) Active zero-power terminal

The zero-power terminal used in some scenarios may also be the active zero-power terminal, which may include a built-in battery. The battery is used for driving the low-power computing module (i.e., the low-power chip circuit) of the zero-power terminal to operate, so as to realize the demodulation of the forward link signal and the modulation of the backward link signal and so on. However, for the backscattering link, the backscattering is used by the zero-power terminal for the signal transmission. Therefore, the zero-power consumption of such type of terminal is mainly reflected in the fact that the signal transmission in the reverse link does not require the power of the terminal itself, but uses the backscattering manner.

The active zero-power terminal supplies the power to the radio-frequency chip through the built-in battery, thereby increasing a communication range and improving a communication reliability. As such, the active zero-power terminal may be applied into some scenarios that require a relatively high requirement in terms of the communication range and a communication delay.

Cellular Passive Internet of Things (IoT)

With the increase of industry applications, types and application scenarios of connected things are also growing, which raises demands for a price and power consumption of a communication terminal. It has become a key technology for the cellular IoT to apply battery-free and low-cost passive IoT devices, these devices enrich the types and quantities of the terminals connected to the network, and truly realize the Internet of everything. The passive IoT device may be implemented based on the zero-power communication technology, such as a radio frequency identification (RFID) technology, and may also be extended on the basis of the zero-power communication technology, to be suitable for the cellular IoT.

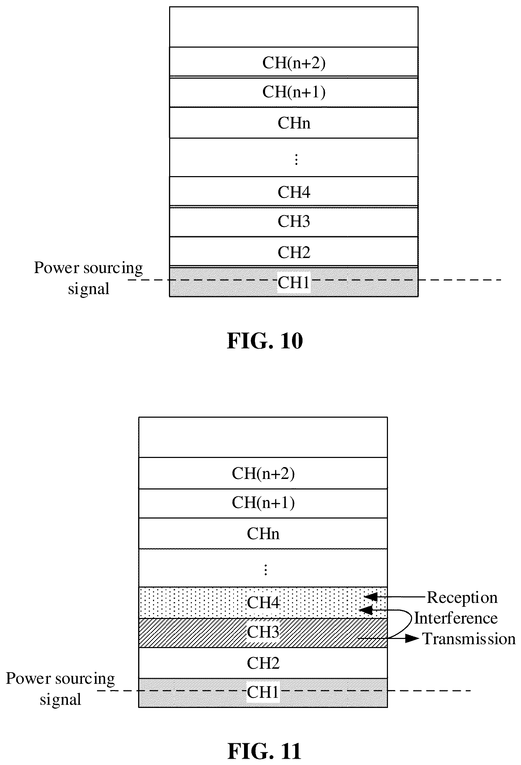

The zero-power terminal is required to harvest power from the radio waves sent by the network device, and then may be driven to operate after obtaining the power. Therefore, before obtaining the power, the zero-power terminal is in a "power-off" state, in which the zero-power terminal cannot receive a signal from the network device or transmit a signal to the network device. When a plurality of channels are deployed in a network, the zero-power terminal may operate in any of the plurality of channels after obtaining the power and being "activated", but the network device generally communicates with the zero-power terminal only in one of the plurality of channels. In addition, when the network device transmits a downlink signal, frequency hopping may occur, which may be understood as the network device re-selecting a channel to transmit the downlink signal. For example, as illustrated in FIG. 10, n+2 channels are deployed by the network, n being a positive integer. A power sourcing channel is channel 1, and the power sourcing channel indicates a channel in which a power sourcing signal (PSS) is located.

The network deploys a plurality of channels, which may also be understood as that a plurality of channels are deployed in the zero-power communication system. Generally, the plurality of channels are a plurality of narrowband channels, and a bandwidth of each channel is, for example, 250 KHz, then a frequency band of 920 to 925 MHz (that is, a bandwidth of 5 MHz) may be divided into 20 channels. When the network device transmits a downlink signal (for example, a trigger signal), the network device may also receive a backscattered signal from the zero-power terminal at the same time. If the network device and the zero-power terminal transmit signals in a same channel or adjacent (or close) two channels at the same time, a self-interference problem in the network device may arise. As illustrated in FIG. 11, the downlink transmission from the network device may interfere with the reception of the backscattered signal by the network device. Because the power of the zero-power terminal is low and the power of network device is high, this self-interference may cause the network device to be unable to decode data carried in the backscattered signal. Therefore, it is a key issue in the zero-power communication system to avoid this self-interference. To this end, the solutions in the embodiments of the disclosure are proposed as follows.

To facilitate understanding of the technical solutions in the embodiments of the disclosure, the technical solutions in the disclosure are described below through the detailed embodiments. The aforementioned related technologies, used as optional solutions, may be combined with the technical solutions in the embodiments of the disclosure in various ways, and such combinations shall fall within the scope of protection of the embodiments of the disclosure. The embodiments of the disclosure include at least part of the following contents.

It is to be noted that the technical solutions in the embodiments of the disclosure are applied to a backscattering communication system, and the backscattering communication system includes, but is not limited to, a zero-power communication system, an ambient powered Internet of things (IoT) system, a passive IOT system, and the like.

It is to be noted that the "terminal device" described in the embodiments of the disclosure includes, but is not limited to, a zero-power terminal, a passive IoT terminal, and an ambient powered IoT terminal. For example, the terminal device may be a radio frequency identification (RFID) device. A typical RFID device is an RFID tag. The RFID tag is also referred to as a "radio frequency tag" or an "electronic tag".

It is to be noted that the network device in the embodiments of the disclosure may be a base station, an access node, a transmission and receiving point (TRP), or the like.

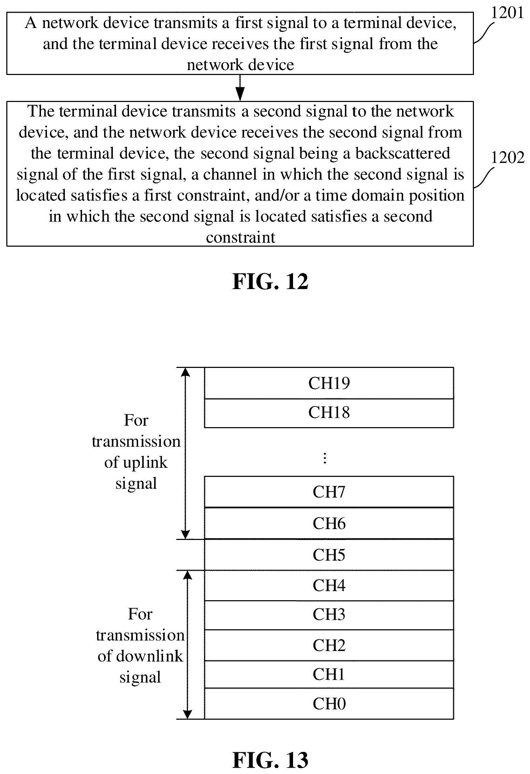

FIG. 12 is a schematic flowchart of a communication method according to an embodiment of the disclosure. As illustrated in FIG. 12, the communication method includes the following operations.

At operation 1201, a network device transmits a first signal to a terminal device, and the terminal device receives the first signal from the network device.

In some embodiments, the first signal may be a trigger signal. The implementation of the trigger signal may be referred to the description of the abovementioned related technologies.

At operation 1202, the terminal device transmits a second signal to the network device, and the network device receives the second signal from the terminal device, the second signal being a backscattered signal of the first signal. A channel in which the second signal is located satisfies a first constraint, and/or a time domain position in which the second signal is located satisfies a second constraint.

In some embodiments, the second signal may be a signal scheduled (or triggered) by the first signal, that is, the first signal is configured to trigger the terminal device to transmit the second signal to the network device. For example, the second signal carries information to be reported by the terminal device to the network device. A type of the information to be reported by the terminal device to the network device may be implemented according to a specific application, which may be, for example, a position, a logistics status, environmental information, etc.

In some embodiments, the network deploys a plurality of channels (e.g., N channels, N being an integer greater than 1). The channel herein may be a cell channel (i.e., there is no distinction between uplink and downlink channels for the plurality of channels).

In some implementations, the network deploys a plurality of downlink channels and/or a plurality of uplink channels (e.g., N1 downlink channels and/or N2 uplink channels, N1 and N2 being integers greater than 1).

In an embodiment of the disclosure, the channel in which the second signal is located satisfies the first constraint, and/or the time domain position in which the second signal is located satisfies the second constraint. In such way, the self-interference problem caused by the second signal (i.e., the backscattered signal) to the network device can be avoided. The specific implementations of the first constraint and the second constraint will be described below.

First solution: frequency domain related constraint (i.e., the first constraint)

Solution 1-1

In some implementations, the first constraint includes that: the channel in which the second signal is located is a channel in a first portion of channels, and the first portion of channels are channels for uplink transmission among channels deployed by a network.

In some implementations, the first portion of channels and/or a second portion of channels and/or a third portion of channels are determined based on first information. On such basis, the terminal device determines the first portion of channels and/or the second portion of channels and/or the third portion of channels based on the first information. The second portion of channels are channels for downlink transmission among the channels deployed by the network, and the third portion of channels are channels for uplink-downlink guard intervals among the channels deployed by the network.

Herein, the first portion of channels are used for the terminal device to transmit an uplink signal (that is, a backscattered signal) and/or for the network device to receive the uplink signal (that is, the backscattered signal), and the first portion of channels are uplink channels (or referred to as backscattered channels). The second portion of channels are used for the terminal device to receive a downlink signal and/or for the network device to transmit the downlink signal, and the second portion of channels are downlink channels. The third portion of channels are used for uplink-downlink guard intervals, and the third portion of channels are uplink-downlink guarding channels. Herein, the uplink-downlink guarding channel may have other names, such as an idle channel, an interval channel, etc.

In the above solution, the channel used for the downlink transmission and the channel used for the uplink transmission are not adjacent to each other through a frequency-domain isolation. Therefore, it is possible to ensure that the channel in which the downlink signal transmitted by the network device is located and the channel in which the uplink backscattered signal (that is, the second signal) transmitted by the terminal device is located are not adjacent to each other, and the problem of self-interference caused by the second signal (that is, the backscattered signal) to the network device can be avoided.

For example, as illustrated in FIG. 13, the network deploys 20 channels (CH). The 20 channels are sequentially numbered 0 to 19 from a low frequency to a high frequency. CH0 to CH4 are used for the downlink transmissions, CH5 is an interval channel, and CH6 to CH19 are used for the uplink transmissions.

In an embodiment of the disclosure, the channels deployed by the network may be sequentially numbered from the low frequency to the high frequency, or may be sequentially numbered from the high frequency to the low frequency. The sequential numbers may be started from 0 or 1.

The way for determination of the first portion of channels, the second portion of channels, and the third portion of channels will be described below. It should be noted that only two portions of channels among the three portions of channels may be determined, and channels other than these two portions of channels among the channels deployed by the network will be another portion of channels. For example, only the first portion of channels and the second portion of channels are determined, and channels, other than the first portion of channels and the second portion of channels, among the channels deployed by the network will be the third portion of channels. For example, only the first portion of channels and the third portion of channels are determined, and channels, other than the first portion of channels and the third portion of channels, among the channels deployed by the network will be the second portion of channels. For example, only the second portion of channels and the third portion of channels are determined, and channels, other than the second portion of channels and the third portion of channels, among the channels deployed by the network will be the first portion of channels. The third portion of channels are located between the first portion of channels and the second portion of channels.

In some implementations, the first information is used for determining at least one of: a number of channels in the first portion of channels; a position of a starting channel in the first portion of channels; a number of channels in the second portion of channels; a position of a starting channel in the second portion of channels; or a number of channels in the third portion of channels.

In some implementations, the first information includes at least one of the following parameters: a first parameter, characterizing a number of channels deployed by the network; a second parameter, characterizing a proportion factor corresponding to the first portion of channels; a third parameter, characterizing a number of channels in the first portion of channels; a fourth parameter, characterizing a proportion factor corresponding to the second portion of channels; a fifth parameter, characterizing a number of channels in the second portion of channels; a sixth parameter, characterizing a proportion factor corresponding to the third portion of channels; or a seventh parameter, characterizing a number of channels in the third portion of channels.

In some implementations, the number of channels in the first portion of channels is determined based on the first parameter and the second parameter; or the number of channels in the first portion of channels is determined based on the third parameter.

In some implementations, the number of channels in the second portion of channels is determined based on the first parameter and the fourth parameter; or the number of channels in the second portion of channels is determined based on the fifth parameter.

In some implementations, the number of channels in the third portion of channels is determined based on the first parameter and the sixth parameter; or the number of channels in the third portion of channels is determined based on the seventh parameter.

In some implementations, the first information includes first indication information and/or second indication information. The first indication information indicates that a starting channel in the first portion of channels is a channel with a lowest frequency among the channels deployed by the network, or that a starting channel in the first portion of channels is a channel with a highest frequency among the channels deployed by the network. The second indication information indicates a channel index of the starting channel in the first portion of channels and/or whether the first portion of channels are continuous channels starting from the channel index to a high-frequency direction or to a low-frequency direction. On such basis, a position of the starting channel in the first portion of channels is determined based on the first indication information and/or the second indication information.

In some implementations, the first information includes third indication information and/or fourth indication information. The third indication information indicates that a starting channel in the second portion of channels is the channel with the highest frequency among the channels deployed by the network, or that a starting channel in the second portion of channels is the channel with the lowest frequency among the channels deployed by the network. The fourth indication information indicates a channel index of the starting channel in the second portion of channels and/or whether the first portion of channels are continuous channels starting from the channel index to a high-frequency direction or to a low-frequency direction. On such basis, a position of the starting channel in the second portion of channels is determined based on the third indication information and/or the fourth indication information.

First portion of channels

In some implementations, the first information is used for determining at least one of: the number of channels in the first portion of channels, or the position of the starting channel in the first portion of channels.

The number of channels in the first portion of channels may be specifically determined through the following options.

Option 1-1) in some implementations, the first information includes the first parameter and the second parameter. The first parameter characterizes the number of channels deployed by the network, and the second parameter characterizes the proportion factor corresponding to the first portion of channels. The number of channels in the first portion of channels is determined based on the first parameter and the second parameter.

For example, the number of channels in the first portion of channels is determined by the following equation:

$$M1 = floor\ (N/S1);\ or\ M1 = ceil\ (N/S1),$$

where M1 represents the number of channels in the first portion of channels, N represents the first parameter, i.e., the number of channels deployed by the network, and S1 represents the second parameter, i.e., the proportion factor corresponding to the first portion of channels.

Option 1-2) in some implementations, the first information includes the third parameter. The third parameter characterizes the number of channels in the first portion of channels. The number of channels in the first portion of channels is determined based on the third parameter.

For example, the number of channels in the first portion of channels is M1, and M1 represents the third parameter, i.e., the number of channels in the first portion of channels.

The position of the starting channel in the first portion of channels may be specifically determined through the following options.

Option 2-1) in some implementations, the first information includes the first indication information. The first indication information indicates that the starting channel in the first portion of channels is the channel with the lowest frequency among the channels deployed by the network, or that the starting channel in the first portion of channels is the channel with the highest frequency among the channels deployed by the network. The position of the starting channel in the first portion of channels is determined based on the first indication information.

Option 2-2) in some implementations, the first information includes the second indication information. The second indication information indicates the channel index of the starting channel in the first portion of channels and/or whether the first portion of channels are continuous channels starting from the channel index to the high-frequency direction or to the low-frequency direction. The position of the starting channel in the first portion of channels is determined based on the second indication information.

In the abovementioned solution, at least part of content in the first information is agreed in a protocol, and/or at least part of content in the first information is determined based on an operating spectrum of the terminal device, and/or at least part of content in the first information is configured by a downlink signal from the network device. The downlink signal may be a trigger signal, system information, a paging message, a downlink beacon frame or any downlink signal transmitted by the network device.

Second portion of channels

In some implementations, the first information is used for determining at least one of: the number of channels in the second portion of channels, or the position of the starting channel in the second portion of channels.

The number of channels in the second portion of channels may be specifically determined through the following options.

Option 1-1) in some implementations, the first information includes the first parameter and the fourth parameter. The first parameter characterizes the number of channels deployed by the network, and the fourth parameter characterizes the proportion factor corresponding to the second portion of channels. The number of channels in the second portion of channels is determined based on the first parameter and the fourth parameter.

For example, the number of channels in the second portion of channels is determined by the following equation:

$$M2 = floor\ (N/S2);\ or\ M2 = ceil\ (N/S2),$$

where M2 represents the number of channels in the second portion of channels, N represents the first parameter, i.e., the number of channels deployed by the network, and S2 represents the fourth parameter, i.e., the proportion factor corresponding to the second portion of channels.

Option 1-2) in some implementations, the first information includes the fifth parameter. The fifth parameter characterizes the number of channels in the second portion of channels. The number of channels in the second portion of channels is determined based on the fifth parameter.

For example, the number of channels in the second portion of channels is M2, and M2 represents the fifth parameter, i.e., the number of channels in the second portion of channels.

The position of the starting channel in the second portion of channels may be specifically determined through the following options.

Option 2-1) in some implementations, the first information includes the third indication information. The third indication information indicates that the starting channel in the second portion of channels is the channel with the highest frequency among the channels deployed by the network, or that the starting channel in the second portion of channels is the channel with the lowest frequency among the channels deployed by the network. The position of the starting channel in the second portion of channels is determined based on the third indication information.

Option 2-2) in some implementations, the first information includes the fourth indication information. The fourth indication information indicates the channel index of the starting channel in the second portion of channels and/or whether the second portion of channels are continuous channels starting from the channel index to the high-frequency direction or to the low-frequency direction. The position of the starting channel in the second portion of channels is determined based on the fourth indication information.

In the abovementioned solution, at least part of the first information is agreed in a protocol, and/or at least part of the first information is determined based on the operating spectrum of the terminal device, and/or at least part of the first information is configured by a downlink signal from the network device. The downlink signal may be a trigger signal, system information, a paging message, a downlink beacon frame or any downlink signal transmitted by the network device.

Third portion of channels

In some implementations, the first information is used for determining the number of channels in the third portion of channels. The third portion of channels are located between the first portion of channels and the second portion of channels.

The number of channels in the third portion of channels may be specifically determined through the following options.

Option 1-1) in some implementations, the first information includes the first parameter and the sixth parameter. The first parameter characterizes the number of channels deployed by the network, and the sixth parameter characterizes the proportion factor corresponding to the third portion of channels. The number of channels in the third portion of channels is determined based on the first parameter and the sixth parameter.

For example, the number of channels in the third portion of channels is determined by the following equation:

$$M3 = floor\ (N/S3);\ or\ M3 = ceil\ (N/S3),$$

where M3 represents the number of channels in the third portion of channels, N represents the first parameter, i.e., the number of channels deployed by the network, and S3 represents the sixth parameter, i.e., the proportion factor corresponding to the third portion of channels.

Option 1-2) in some implementations, the first information includes the seventh parameter. The seventh parameter characterizes the number of channels in the third portion of channels. The number of channels in the third portion of channels is determined based on the seventh parameter.

For example, the number of channels in the third portion of channels is M3, and M3 represents the seventh parameter, i.e., the number of channels in the third portion of channels.

In the abovementioned solution, at least part of the first information is agreed in a protocol, and/or at least part of the first information is determined based on the operating spectrum of the terminal device, and/or at least part of the first information is configured by a downlink signal from the network device. The downlink signal may be a trigger signal, system information, a paging message, a downlink beacon frame or any downlink signal transmitted by the network device.

According to the abovementioned solutions, a channel pattern deployed by the network may be determined, based on which the terminal device selects the channel for transmitting the second signal among the first portion of channels.

In an example, at least one piece of the following information is agreed in the protocol: the number N of channels deployed by the network, the proportion factor S1 corresponding to the first portion of channels, the proportion factor S2 corresponding to the second portion of channels, the proportion factor S3 corresponding to the third portion of channels, the number M1 of channels in the first portion of channels, the number M2 of channels in the second portion of channels, the number M3 of channels in the third portion of channels, whether the first portion of channels are M1 channels counted from the low frequency or from the high frequency, whether the second portion of channels are M2 channels counted from the low frequency or from the high frequency, the channel index of the starting channel in the first portion of channels, or the channel index of the starting channel in the second portion of channels.

In an example, at least one piece of the following information is determined based on the operating spectrum of the terminal device: the number N of channels deployed by the network, the proportion factor S1 corresponding to the first portion of channels, the proportion factor S2 corresponding to the second portion of channels, the proportion factor S3 corresponding to the third portion of channels, the number M1 of channels in the first portion of channels, the number M2 of channels in the second portion of channels, the number M3 of channels in the third portion of channels, whether the first portion of channels are M1 channels counted from the low frequency or from the high frequency, whether the second portion of channels are M2 channels counted from the low frequency or from the high frequency, the channel index of the starting channel in the first portion of channels, or the channel index of the starting channel in the second portion of channels. The spectrum and the abovementioned information have a mapping relationship, and the information corresponding to the spectrum may be determined based on the mapping relationship.

In an example, at least one piece of the following information is determined based on configuration information carried in the trigger signal or the system information or the paging message or the downlink beacon frame or any downlink signal transmitted by the network device: the number N of channels deployed by the network, the proportion factor S1 corresponding to the first portion of channels, the proportion factor S2 corresponding to the second portion of channels, the proportion factor S3 corresponding to the third portion of channels, the number M1 of channels in the first portion of channels, the number M2 of channels in the second portion of channels, the number M3 of channels in the third portion of channels, whether the first portion of channels are M1 channels counted from the low frequency or from the high frequency, whether the second portion of channels are M2 channels counted from the low frequency or from the high frequency, the channel index of the starting channel in the first portion of channels, or the channel index of the starting channel in the second portion of channels. The spectrum and the abovementioned information have a mapping relationship, and the information corresponding to the spectrum may be determined based on the mapping relationship.

Solution 1-2

In some implementations, the first constraint includes that: the channel in which the second signal is located is a channel, other than a fourth portion of channels, among the channels deployed by the network, and/or the channel in which the second signal is located is a channel in a fifth portion of channels among the channels deployed by the network.

In some implementations, the fourth portion of channels are channels used by the network device for next one or more downlink transmissions after the first signal has been transmitted. The first signal carries second information, and the second information indicates the fourth portion of channels.

On such basis, the terminal device selects the channel for transmitting the second signal from channels, other than the fourth portion of channels, among the channels deployed by the network.

In an example, when the terminal device receives the trigger signal from the network device, the terminal device concerns whether the channel(s) used by the network device for the next transmission or next n transmissions of the downlink signal is(are) the same as or adjacent to the channel used by the terminal device to transmit the backscattered signal currently, and whether the channel leakage interference is subjected to. Based on this consideration, the network device carries information (i.e., the second information) in the downlink signal (i.e., the first signal) transmitted currently, and the information indicates the channel(s) (i.e., the fourth portion of channels) preselected for the next downlink transmission or next n downlink transmissions. When the terminal device performs the backscattering based on the current downlink signal, the terminal device avoids the channel(s) (i.e., the fourth portion of channels) indicated by the network device when selecting the channel for the backscattered signal (that is, the second signal).

In some implementations, the fourth portion of channels are channels that are not allowed to be used by the terminal device, and the fifth portion of channels are channels that are allowed to be used by the terminal device. The first signal carries the second information and/or third information, the second information indicates the fourth portion of channels, and the third information indicates the fifth portion of channels.

On such basis, the terminal device selects the channel for transmitting the second signal from channels, other than the fourth portion of channels, among the channels deployed by the network; and/or the terminal device selects the channel for transmitting the second signal from the fifth portion of channels among the channels deployed by the network.

In an example, when the terminal device receives the trigger signal from the network device, the terminal device concerns whether the channel(s) used by the network device for the next transmission or next n transmissions of the downlink signal is(are) the same as or adjacent to the channel used by the terminal device to transmit the backscattered signal currently, and whether the channel leakage interference is subjected to. Based on this consideration, the network device carries information (i.e., the second information and/or the third information) in the downlink signal (i.e., the first signal) transmitted currently, and the information indicates a whitelist (i.e., the fifth portion of channels) and/or a blacklist (i.e., the fourth portion of channels) of the channels that are allowed to be selected for the backscattering by the terminal device based on the current downlink transmission. If the whitelist is indicated by the network device, when the terminal device performs the backscattering based on the current downlink signal and selecting the channel for the backscattered signal (that is, the second signal), the terminal device selects the channel in the whitelist for the backscattering. If the blacklist is indicated by the network device, when the terminal device performs the backscattering based on the current downlink signal and selecting the channel for the backscattered signal (that is, the second signal), the terminal device excludes the channels in the blacklist for the backscattering.

Second solution: time domain related constraint (i.e. the second constraint)

In some implementations, the second constraint includes that: the time domain position in which the second signal is located does not overlap with a first time domain position, or the time domain position in which the second signal is located does not fall within a first time window.

In some implementations, the first time domain position is a time domain position used by the network device for next one or more downlink transmissions after the first signal has been transmitted.

In some implementations, the first time domain position may be determined by the following way. The first signal carries fourth information for indicating the first time domain position or indicating a time interval between the first time domain position and a time domain position in which the first signal is located.

In some implementations, the first time window may be determined by the following options.

Option 1) in some implementations, the first signal carries fifth information for indicating at least one of: a starting time of the first time window, an ending time of the first time window, or a duration of the first time window.

Option 2) in some implementations, the starting time of the first time window is determined based on the first time domain position and a first duration; and/or the ending time of the first time window is determined based on the first time domain position and a second duration. Specifically, the first signal carries sixth information for indicating at least one of: the first duration between the starting time of the first time window and the first time domain position; or the second duration between the ending time of the first time window and the first time domain position.

On such basis, the terminal device selects a time domain position outside of the first time domain position or the first time window as the time domain position for transmitting the second signal.

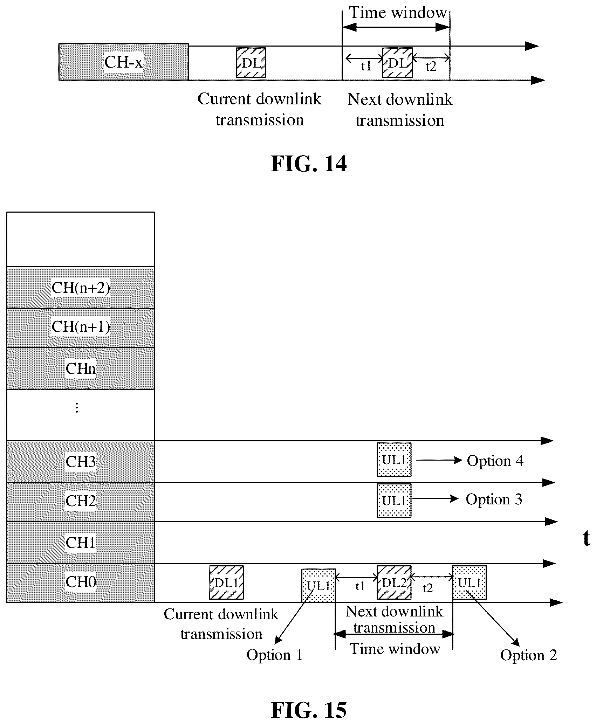

In an example, when the terminal device receives the trigger signal from the network device, the terminal device concerns whether the channel(s) used by the network device for the next transmission or next n transmissions of the downlink signal is(are) the same as or adjacent to the channel used by the terminal device to transmit the backscattered signal currently, and whether the channel leakage interference is subjected to. Based on this consideration, the network device carries information (i.e., the fourth information) in the downlink signal (i.e., the first signal) transmitted currently, and the information indicates time interval(s) between the time(s) when the network device performs the next downlink transmission or next n downlink transmissions and the time when the network device performs the current downlink transmission, and the time(s) (i.e., a target time) when the network device performs the next downlink transmission or next n downlink transmissions may be determined based on the information and the time when the network device performs the current downlink transmission. When the terminal device performs backscattering based on the current downlink signal and selecting the time for the backscattered signal (that is, the second signal), the terminal device avoids the target time to perform the backscattering. Further, the network device may carry other information (i.e., the fifth information or the sixth information) in the downlink signal (i.e., the first signal) transmitted currently, and indicate a time window through the information. The time window is a time period defined by a time period of t1 before the target time and/or a time period of t2 after the target time (as illustrated in FIG. 14). When the terminal device performs the backscattering based on the current downlink signal and selecting the time for the backscattered signal (that is, the second signal), the terminal device avoids the entire time in the time window for the backscattering.

Third solution: time-frequency domain related constraint (i.e., a combination of the first constraint and the second constraint)

The above first solution and second solution may be implemented in combination.

Solution 3-1

In some implementations, when a time domain position selected by the terminal device for the second signal does not satisfy the second constraint, the terminal device selects a channel satisfying the first constraint for the second signal; when the time domain position selected by the terminal device for the second signal satisfies the second constraint, the terminal device randomly selects a channel among the channels deployed by the network as the channel for transmitting the second signal.

Solution 3-2

In some implementations, when a channel selected by the terminal device for the second signal does not satisfy the first constraint, the terminal device selects a time domain position satisfying the second constraint for the second signal; when the channel selected by the terminal device for the second signal satisfies the first constraint, the terminal device randomly selects a time domain position as the time domain position for transmitting the second signal.

In an example, when the terminal device receives the trigger signal from the network device, the terminal device concerns whether the channel(s) used by the network device for the next transmission or next n transmissions of the downlink signal is(are) the same as or adjacent to the channel used by the terminal device to transmit the backscattered signal currently, and whether the channel leakage interference is subjected to. Based on this consideration, the network device carries information 1 (i.e., the fourth information, the fifth information and the sixth information) and information 2 (i.e., the second information and the third information) in the downlink signal (i.e., the first signal) transmitted currently. The information 1 indicates the second constraint such as the time interval(s), between the time(s) when the network device performs the next downlink transmission or next n downlink transmissions and the time when the network device performs the current downlink transmission, and/or indicates a time window. The information 2 indicates the first constraint, such as the whitelist or the blacklist of the channels that are allowed to be selected for the backscattering by the terminal device based on the current downlink transmission. The terminal device selects a channel and a time domain position based on the information 1 and the information 2 to transmit the backscattered signal. Specifically, if the time at which the terminal device performs the backscattering overlaps or completely overlaps with the time or the time window indicated in the information 1, the terminal device may only select a channel for transmitting the backscattered signal from the whitelist indicated in the information 2, or select a channel, other than the channels in the blacklist indicated in the information 2, for transmitting the backscattered signal. If the time at which the terminal device performs the backscattering does not overlap with the time or the time window indicated in the information 1, the terminal device selects the channel without being constrained by the information 2. As illustrated in FIG. 15, the current downlink transmission from the network device is DL1, the next downlink transmission from the network device is DL2, and the backscattering from the terminal device with respect to DL1 is UL1. If the time for transmitting the UL1 overlaps with the time for the DL1 or falls into a time window close to DL1, the channel for the UL1 needs to be selected as a channel in the whitelist or a channel outside the blacklist, otherwise, the channel for the UL1 is not subject to the blacklist and the whitelist.

Preferred embodiments of the disclosure have been described in detail above with reference to the accompanying drawings. However, the disclosure is not limited to the specific details of the above embodiments. Various simple modifications may be made to the technical solutions in the disclosure within the scope of the technical conception of the disclosure, and these simple modifications shall fall within the scope of protection of the disclosure. For example, various specific technical features described in the above specific embodiments may be combined in any suitable manner without contradiction, and various possible combinations are not further described in the disclosure in order to avoid unnecessary repetition. For another example, various implementations of the disclosure may also be arbitrarily combined with each other, as long as the combination does not depart from the idea of the disclosure and the combinations shall also be considered as the content of the disclosure. For another example, various embodiments described in the disclosure and/or the technical features in the embodiments may be combined with the related art in any manner on the premise of no conflict, and the combined technical solution should also fall within the scope of protection of the disclosure.

It should be understood that in various method embodiments of the disclosure, the sequence number of the above-mentioned operations does not mean an order of execution, and the execution order of the operations is determined by their functions and inherent logic, which should not constitute any limitation to the implementation process of the embodiments of the disclosure. Further, in the embodiments of the disclosure, the terms "downlink", "uplink" and "sidelink" each represents a transmission direction of a signal or data. The term "downlink" represents that the transmission direction of the signal or data is a first direction from a site to a UE in a cell, the term "uplink" represents that the transmission direction of the signal or data is a second direction from the UE in the cell to the site, and the term "sidelink" represents that the transmission direction of the signal or data is a third direction from a first UE to a second UE. For example, the "downlink signal" means that the transmission direction of the signal is the first direction. In addition, in the embodiments of the disclosure, the term "and/or" herein is only used to describe an association relationship between associated objects, and represents that three relationships may exist. Specifically, A and/or B may represent three conditions: i.e., independent existence of A, existence of both A and B and independent existence of B. In addition, the character "/" in the disclosure usually represents that previous and next associated objects form an "or" relationship.

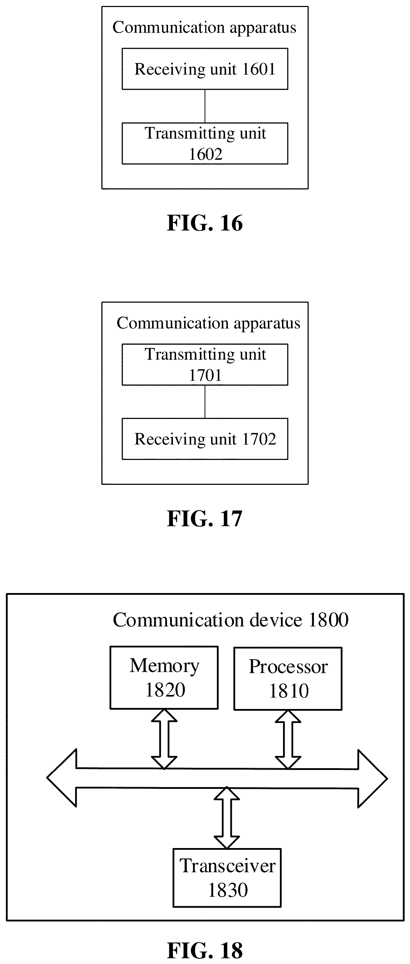

FIG. 16 is a first schematic diagram of a structural composition of a communication apparatus provided in an embodiment of the disclosure. The communication apparatus is applied to a terminal device in a zero-power communication system, and as illustrated in FIG. 16, the communication apparatus includes a receiving unit 1601 and a transmitting unit 1602.

The receiving unit 1601 is configured to receive a first signal from a network device.

The transmitting unit 1602 is configured to transmit a second signal to the network device, the second signal being a backscattered signal of the first signal.

A channel in which the second signal is located satisfies a first constraint, and/or a time domain position in which the second signal is located satisfies a second constraint.

In some implementations, the first constraint includes that: the channel in which the second signal is located is a channel in a first portion of channels, and the first portion of channels are channels for uplink transmission among channels deployed by a network.

In some implementations, the apparatus further includes a determination unit, configured to determine the first portion of channels and/or a second portion of channels and/or a third portion of channels based on first information.

The second portion of channels are channels for downlink transmission among the channels deployed by the network, and the third portion of channels are channels for uplink-downlink guard intervals among the channels deployed by the network.

In some implementations, the first information is used for determine at least one of: a number of channels in the first portion of channels; a position of a starting channel in the first portion of channels; a number of channels in the second portion of channels; a position of a starting channel in the second portion of channels; or a number of channels in the third portion of channels.

In some implementations, the first information includes at least one of the following parameters: a first parameter, characterizing a number of channels deployed by the network; a second parameter, characterizing a proportion factor corresponding to the first portion of channels; a third parameter, characterizing a number of channels in the first portion of channels; a fourth parameter, characterizing a proportion factor corresponding to the second portion of channels; a fifth parameter, characterizing a number of channels in the second portion of channels; a sixth parameter, characterizing a proportion factor corresponding to the third portion of channels; or a seventh parameter, characterizing a number of channels in the third portion of channels.

In some implementations, the number of channels in the first portion of channels is determined based on the first parameter and the second parameter; or the number of channels in the first portion of channels is determined based on the third parameter.

In some implementations, the number of channels in the second portion of channels is determined based on the first parameter and the fourth parameter; or the number of channels in the second portion of channels is determined based on the fifth parameter.

In some implementations, the number of channels in the third portion of channels is determined based on the first parameter and the sixth parameter; or the number of channels in the third portion of channels is determined based on the seventh parameter.

In some implementations, the first information includes first indication information and/or second indication information. The first indication information indicates that a starting channel in the first portion of channels is a channel with a lowest frequency among the channels deployed by the network, or that a starting channel in the first portion of channels is a channel with a highest frequency among the channels deployed by the network. The second indication information indicates a channel index of the starting channel in the first portion of channels and/or whether the first portion of channels are continuous channels starting from the channel index to a high-frequency direction or to a low-frequency direction.

In some implementations, a position of the starting channel in the first portion of channels is determined based on the first indication information and/or the second indication information.

In some implementations, the first information includes third indication information and/or fourth indication information. The third indication information indicates that a starting channel in the second portion of channels is a channel with a highest frequency among the channels deployed by the network, or that a starting channel in the second portion of channels is a channel with a lowest frequency among the channels deployed by the network. The fourth indication information indicates a channel index of the starting channel in the second portion of channels and/or whether the first portion of channels are continuous channels starting from the channel index to a high-frequency direction or to a low-frequency direction.

In some implementations, a position of the starting channel in the second portion of channels is determined based on the third indication information and/or the fourth indication information.

In some implementations, the third portion of channels are located between the first portion of channels and the second portion of channels.

In some implementations, at least part of the first information is agreed in a protocol, and/or at least part of the first information is determined based on an operating spectrum of the terminal device, and/or at least part of the first information is configured by a downlink signal from the network device.

In some implementations, the apparatus further includes a selection unit, configured to select the channel for transmitting the second signal among the first portion of channels.

In some implementations, the first constraint includes that: the channel in which the second signal is located is a channel, other than a fourth portion of channels, among the channels deployed by the network, and/or the channel in which the second signal is located is a channel in a fifth portion of channels among the channels deployed by the network.

In some implementations, the fourth portion of channels are channels used by the network device for next one or more downlink transmissions after the first signal has been transmitted.

In some implementations, the fourth portion of channels are channels that are not allowed to be used by the terminal device, and the fifth portion of channels are channels that are allowed to be used by the terminal device.

In some implementations, the first signal carries second information and/or third information, the second information indicates the fourth portion of channels, and the third information indicates the fifth portion of channels.

In some implementations, the apparatus further includes a selection unit. The selection unit is configured to: select the channel for transmitting the second signal from channels, other than the fourth portion of channels, among the channels deployed by the network; and/or select the channel for transmitting the second signal from the fifth portion of channels among the channels deployed by the network.

In some implementations, the second constraint includes that: the time domain position in which the second signal is located does not overlap with a first time domain position, or the time domain position in which the second signal is located does not fall within a first time window.

In some implementations, the first time domain position is a time domain position used by the network device for next one or more downlink transmissions after the first signal has been transmitted.

In some implementations, the first signal carries fourth information for indicating the first time domain position or indicating a time interval between the first time domain position and a time domain position in which the first signal is located.

In some implementations, a starting time of the first time window is determined based on the first time domain position and a first duration; and/or an ending time of the first time window is determined based on the first time domain position and a second duration.

In some implementations, the first signal carries fifth information for indicating at least one of: the starting time of the first time window, the ending time of the first time window, or a duration of the first time window.

In some implementations, the first signal carries sixth information for indicating at least one of: the first duration between the starting time of the first time window and the first time domain position; or the second duration between the ending time of the first time window and the first time domain position.

In some implementations, the apparatus further includes a selection unit, configured to select a time domain position outside of the first time domain position or the first time window as the time domain position for transmitting the second signal.

In some implementations, the selection unit is configured to: when a time domain position selected for the second signal does not satisfy the second constraint, select a channel satisfying the first constraint for the second signal; when the time domain position selected for the second signal satisfies the second constraint, randomly select a channel among the channels deployed by the network as the channel for transmitting the second signal.

In some implementations, the selection unit is configured to: when a channel selected for the second signal does not satisfy the first constraint, select a time domain position satisfying the second constraint for the second signal; when the channel selected for the second signal satisfies the first constraint, randomly select a time domain position as the time domain position for transmitting the second signal.

It should be understood by a person of ordinary skill in the art that the relevant description of the above communication apparatus in the embodiments of the disclosure may be understood with reference to the relevant description of the communication method in the embodiments of the disclosure.

FIG. 17 is a second schematic diagram of a structural composition of a communication apparatus provided in an embodiment of the disclosure. The communication apparatus is applied to a network device in a zero-power communication system, and as illustrated in FIG. 17, the communication apparatus includes a transmitting unit 1701 and a receiving unit 1702.

The transmitting unit 1701 is configured to transmit a first signal to a terminal device.

The receiving unit 1702 is configured to receive a second signal from the terminal device, the second signal being a backscattered signal of the first signal.

A channel in which the second signal is located satisfies a first constraint, and/or a time domain position in which the second signal is located satisfies a second constraint.

In some implementations, the first constraint includes that: the channel in which the second signal is located is a channel in a first portion of channels, and the first portion of channels are channels for uplink transmission among channels deployed by a network.

In some implementations, the first portion of channels and/or a second portion of channels and/or a third portion of channels are determined based on first information. The second portion of channels are channels for downlink transmission among the channels deployed by the network, and the third portion of channels are channels for uplink-downlink guard intervals among the channels deployed by the network.

In some embodiments, the first information is used for determine at least one of: a number of channels in the first portion of channels; a position of a starting channel in the first portion of channels; a number of channels in the second portion of channels; a position of a starting channel in the second portion of channels; or a number of channels in the third portion of channels.

In some implementations, the first information includes at least one of the following parameters: a first parameter, characterizing a number of channels deployed by the network; a second parameter, characterizing a proportion factor corresponding to the first portion of channels; a third parameter, characterizing a number of channels in the first portion of channels; a fourth parameter, characterizing a proportion factor corresponding to the second portion of channels; a fifth parameter, characterizing a number of channels in the second portion of channels; a sixth parameter, characterizing a proportion factor corresponding to the third portion of channels; or a seventh parameter, characterizing a number of channels in the third portion of channels.

In some implementations, the number of channels in the first portion of channels is determined based on the first parameter and the second parameter; or the number of channels in the first portion of channels is determined based on the third parameter.

In some implementations, the number of channels in the second portion of channels is determined based on the first parameter and the fourth parameter; or the number of channels in the second portion of channels is determined based on the fifth parameter.

In some implementations, the number of channels in the third portion of channels is determined based on the first parameter and the sixth parameter; or the number of channels in the third portion of channels is determined based on the seventh parameter.

In some implementations, the first information includes first indication information and/or second indication information.

The first indication information indicates that a starting channel in the first portion of channels is a channel with a lowest frequency among the channels deployed by the network, or that a starting channel in the first portion of channels is a channel with a highest frequency among the channels deployed by the network.

The second indication information indicates a channel index of the starting channel in the first portion of channels and/or whether the first portion of channels are continuous channels starting from the channel index to a high-frequency direction or to a low-frequency direction.

In some implementations, the position of the starting channel in the first portion of channels is determined based on the first indication information and/or the second indication information.

In some implementations, the first information includes third indication information and/or fourth indication information.

The third indication information indicates that a starting channel in the second portion of channels is a channel with a highest frequency among the channels deployed by the network, or that a starting channel in the second portion of channels is a channel with a lowest frequency among the channels deployed by the network.

The fourth indication information indicates a channel index of the starting channel in the second portion of channels and/or whether the first portion of channels are continuous channels starting from the channel index to a high-frequency direction or to a low-frequency direction.

In some implementations, the position of the starting channel in the second portion of channels is determined based on the third indication information and/or the fourth indication information.

In some implementations, the third portion of channels are located between the first portion of channels and the second portion of channels.

In some implementations, at least part of the first information is agreed in a protocol, and/or at least part of the first information is determined based on an operating spectrum of the terminal device, and/or at least part of the first information is configured by a downlink signal from the network device.

In some implementations, the first constraint includes that: the channel in which the second signal is located is a channel, other than a fourth portion of channels, among the channels deployed by the network, and/or the channel in which the second signal is located is a channel in a fifth portion of channels among the channels deployed by the network.

In some implementations, the fourth portion of channels are channels used by the network device for next one or more downlink transmissions after the first signal has been transmitted.

In some implementations, the fourth portion of channels are channels that are not allowed to be used by the terminal device, and the fifth portion of channels are channels that are allowed to be used by the terminal device.

In some implementations, the first signal carries second information and/or third information, the second information indicates the fourth portion of channels, and the third information indicates the fifth portion of channels.

In some implementations, the second constraint includes that: the time domain position in which the second signal is located does not overlap with a first time domain position, or the time domain position in which the second signal is located does not fall within a first time window.

In some implementations, the first time domain position is a time domain position used by the network device for next one or more downlink transmissions after the first signal has been transmitted.

In some implementations, the first signal carries fourth information for indicating the first time domain position or indicating a time interval between the first time domain position and a time domain position in which the first signal is located.

In some implementations, a starting time of the first time window is determined based on the first time domain position and a first duration; and/or an ending time of the first time window is determined based on the first time domain position and a second duration.

In some implementations, the first signal carries fifth information for indicating at least one of: the starting time of the first time window, the ending time of the first time window, or a duration of the first time window.

In some implementations, the first signal carries sixth information for indicating at least one of: the first duration between the starting time of the first time window and the first time domain position; or the second duration between the ending time of the first time window and the first time domain position.

It should be understood by a person of ordinary skill in the art that the relevant description of the above communication apparatus in the embodiments of the disclosure may be understood with reference to the relevant description of the communication method in the embodiments of the disclosure.

FIG. 18 is a schematic structural diagram of a communication device 1800 according to an embodiment of the disclosure. The communication device may be a terminal device or a network device. The communication device 1800 illustrated in FIG. 18 includes a processor 1810. The processor 1810 may be configured to call a computer program from a memory and run the computer program to perform the methods according to the embodiments of the disclosure.

Optionally, as illustrated in FIG. 18, the communication device 1800 may further include a memory 1820. The processor 1810 may be configured to call the computer program from the memory 1820 and run the computer program to perform the methods according to the embodiments of the disclosure.

The memory 1820 may be a separate device independent from the processor 1810, or may be integrated into the processor 1810.

Optionally, as illustrated in FIG. 18, the communication device 1800 may further include a transceiver 1830. The processor 1810 may control the transceiver 1830 to communicate with other devices, specifically, to transmit information or data to other devices, or receive information or data from other devices.

The transceiver 1830 may include a transmitter and a receiver. The transceiver 1830 may further include an antenna, and there may be one or more antennas.

Optionally, the communication device 1800 may specifically be the network device in the embodiments of the disclosure, and the communication device 1800 may implement corresponding processes that are implemented by the network device in various methods in the embodiments of the disclosure. For brevity, details are not elaborated herein again.

Optionally, the communication device 1800 may specifically be a mobile terminal/terminal device in the embodiments of the disclosure, and the communication device 1800 may implement corresponding processes that are implemented by the mobile terminal/-terminal device in various methods of the embodiments of the disclosure. For brevity, details are not elaborated herein again.

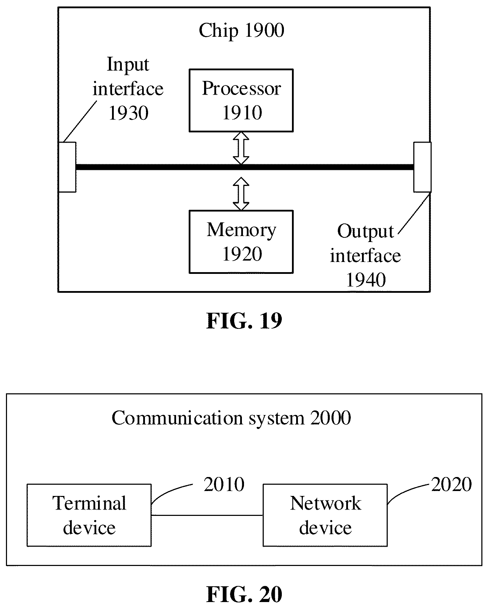

FIG. 19 is a schematic structural diagram of a chip according to an embodiment of the disclosure. The chip 1900 illustrated in FIG. 19 includes a processor 1910. The processor 1910 may be configured to call a computer program from a memory and run the computer program to perform the methods according to the embodiments of the disclosure.

Optionally, as illustrated in FIG. 19, the chip 1900 may further include a memory 1920. The processor 1910 may be configured to call the computer program from the memory 1920 and run the computer program to perform the methods according to the embodiments of the disclosure.

The memory 1920 may be a separate device independent from the processor 1910, or may be integrated into the processor 1910.

Optionally, the chip 1900 may further include an input interface 1930. The processor 1910 may control the input interface 1930 to communicate with other devices or chips, specifically, to obtain information or data from other devices or chips.

Optionally, the chip 1900 may further include an output interface 1940. The processor 1910 may control the output interface 1740 to communicate with other devices or chips, specifically, to output information or data to other devices or chips.

Optionally, the chip may be applied to the network device in the embodiments of the disclosure, and the chip may implement corresponding processes that are implemented by the network device in various methods in the embodiments of the disclosure. For brevity, details are not elaborated herein again.

Optionally, the chip may be applied to the mobile terminal/terminal device in the embodiments of the disclosure, and the chip may implement corresponding processes that are implemented by the mobile terminal/-terminal device in various methods of the embodiments of the disclosure. For brevity, details are not elaborated herein again.

It should be understood that, the chip mentioned in the embodiments of the disclosure may also be referred to as a system-level chip, a system chip, a chip system or a system on chip, etc.

FIG. 20 is a schematic block diagram of a communication system 2000 provided in an embodiment of the disclosure. As illustrated in FIG. 20, the communication system 2000 includes a terminal device 2010 and a network device 2020.

The terminal device 2010 may be configured to implement corresponding functions that are implemented by the terminal device in the above method. The network device 2020 may be configured to implement corresponding functions that are implemented by the network device in the above method. For brevity, details are not elaborated herein again.

It should be understood that, the processor in the embodiments of the disclosure may be an integrated circuit chip having a signal processing capability. During implementation, the operations in the foregoing method embodiments may be implemented by using an integrated logic circuit in a hardware form in the processor or implemented by using instructions in a software form.

The foregoing processor may be a general purpose processor, a digital signal processor (DSP), an application-specific integrated circuit (ASIC), a field programmable gate array (FPGA), or another programmable logical device, a discrete gate or transistor logical device, or a discrete hardware component. The processor may be configured to implement or perform methods, operations and logical blocks disclosed in the embodiments of the disclosure. The general-purpose processor may be a microprocessor or the processor may be any conventional processor and the like. The operations of the methods disclosed with reference to the embodiments of the disclosure may be directly executed and completed by means of a hardware decoding processor, or may be executed and completed by using a combination of hardware in the decoding processor and a software module. The software module may be located in a mature storage medium in the field, such as a random access memory (RAM), a flash memory, a read-only memory (ROM), a programmable ROM (PROM), an electrically-erasable programmable memory, or a register. The storage medium is located in the memory, and the processor reads information in the memory and completes the operations in the foregoing methods in combination with the hardware of the processor.

It can be understood that, the memory in the embodiments of the disclosure may be a volatile memory or a non-volatile memory, or may include both a volatile memory and a non-volatile memory. The non-volatile memory may be an ROM, a PROM, an erasable PROM (EPROM), an electrically EPROM (EEPROM) or a flash memory. The volatile memory may be an RAM and is used as an external cache. By way of illustration, but not limitation, many forms of RAMs may be used, for example, a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that, the memory in the system and method described herein is intended to include, but is not limited to, these memories and any other suitable types of memories.

It should be understood that, the foregoing memory is exemplary but not limited description, for example, the memory in the embodiments of the disclosure may be an SRAM, a DRAM, an SDRAM, a DDR SDRAM, an ESDRAM, an SLDRAM and a DR RAM, etc. That is, the memory in the embodiments of the disclosure is intended to include, but is not limited to, these memories and any other suitable types of memories.

An embodiment of the disclosure further provides a computer-readable storage medium configured to store a computer program.

Optionally, the computer-readable storage medium may be applied to the network device in the embodiments of the disclosure, and the computer program causes a computer to perform corresponding processes that are performed by the network device in various methods in the embodiments of the disclosure. For brevity, details are not elaborated herein again.

Optionally, the computer-readable storage medium may be applied to the mobile terminal/terminal device in the embodiments of the disclosure, and the computer program causes a computer to perform corresponding processes that are implemented by the mobile terminal/terminal device in various methods in the embodiments of the disclosure. For brevity, details are not elaborated herein again.

An embodiment of the disclosure further provides a computer program product including computer program instructions.

Optionally, the computer program product may be applied to the network device in the embodiments of the disclosure, and the computer program instructions cause a computer to implement corresponding processes that are performed by the network device in various methods in the embodiments of the disclosure. For brevity, details are not elaborated herein again.

Optionally, the computer program product may be applied to the mobile terminal/terminal device in the embodiments of the disclosure, and the computer program instructions cause a computer to implement corresponding processes that are implemented by the mobile terminal/terminal device in various methods in the embodiments of the disclosure. For brevity, details are not elaborated herein again.

An embodiment of the disclosure further provides a computer program.

Optionally, the computer program may be applied to the network device in the embodiments of the disclosure, and when the computer program is executed by a computer, it causes the computer to implement corresponding processes that are performed by the network device in various methods in the embodiments of the disclosure. For brevity, details are not elaborated herein again.

Optionally, the computer program may be applied to the mobile terminal/terminal device in the embodiments of the disclosure, and when the computer program is executed by a computer, it causes the computer to implement corresponding processes that are implemented by the mobile terminal/terminal device in various methods in the embodiments of the disclosure. For brevity, details are not elaborated herein again.

A person of ordinary skill in the art may be aware that, units and algorithm steps of various examples described in combination with the embodiments disclosed herein may be implemented by electronic hardware, or a combination of computer software and the electronic hardware. Whether the functions are performed by hardware or software depends on particular applications and design constraint conditions of the technical solutions. Those skilled in the art may use different methods to implement the described functions for each particular application, and such implementations should not be considered to go beyond the scope of this application.

It may be clearly understood by those skilled in the art that, for the purpose of convenient and brief description, the detailed working process of the foregoing system, apparatus, and units may refer to the corresponding process in the foregoing method embodiments, and details are not elaborated herein again.

In the several embodiments provided in this disclosure, it should be understood that the disclosed system, apparatus, and method may be implemented in other manners. For example, the described apparatus embodiments are merely exemplary. For example, the unit division is merely a logical function division and there may be other divisions in actual implementations. For example, multiple units or components may be combined or integrated into another system, or some features may be ignored or not performed. In addition, the displayed or discussed mutual coupling or direct coupling or communication connections may be an indirect coupling or communication connection implemented through some interfaces, apparatuses or units, and may be implemented in electrical, mechanical or other forms.

The units described as separate parts may be or may not be physically separated, and parts displayed as units may be or may not be physical units, that is, they may be located in one place, or may be distributed on multiple network units. Some or all of the units may be selected according to actual needs to achieve the objectives of the solutions in the embodiments.

In addition, functional units in the embodiments of this disclosure may be integrated into one processing unit, or each of the units may exist physically and separately, or two or more units are integrated into one unit.

When the functions are implemented in form of a software functional module and sold or used as an independent product, the functions may be stored in a computer-readable storage medium. Based on such an understanding, the technical solutions of the disclosure essentially, or the part contributing to the prior art, or part of the technical solutions may be embodied in the form of a software product. The computer software product is stored in a storage medium, and includes several instructions for instructing a computer device (which may be a personal computer, a server, a network device, and the like) to perform all or part of the operations of the method described in the embodiment of the disclosure. The foregoing storage medium includes: any medium that can store program codes, such as a USB flash disk, a removable hard disk, an ROM, an RAM, a magnetic disk, or an optical disk.

The foregoing descriptions are merely specific implementations of the disclosure, and are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure shall be subject to the scope of protection of the claims.

**Claims**

1. A communication method, comprising:
   receiving, by a terminal device, a first signal from a network device, and transmitting a second signal to the network device, the second signal being a backscattered signal of the first signal, wherein a channel in which the second signal is located satisfies a first constraint, and/or a time domain position in which the second signal is located satisfies a second constraint.

2. The method of claim 1, wherein the first constraint comprises that: the channel in which the second signal is located is a channel in a first portion of channels, and the first portion of channels are channels for uplink transmission among channels deployed by a network.

3. The method of claim 2, further comprising:

   determining, by the terminal device based on first information, the first portion of channels and/or a second portion of channels and/or a third portion of channels, wherein
   the second portion of channels are channels for downlink transmission among the channels deployed by the network, and the third portion of channels are channels for uplink-downlink guard intervals among the channels deployed by the network.

4. The method of claim 3, wherein the first information is used for determining at least one of:

   a number of channels in the first portion of channels;
   a position of a starting channel in the first portion of channels;
   a number of channels in the second portion of channels;
   a position of a starting channel in the second portion of channels; or
   a number of channels in the third portion of channels.

5. The method of claim 3 or 4, wherein the first information comprises at least one of the following parameters:

   a first parameter, characterizing a number of channels deployed by the network;
   a second parameter, characterizing a proportion factor corresponding to the first portion of channels;
   a third parameter, characterizing a number of channels in the first portion of channels;
   a fourth parameter, characterizing a proportion factor corresponding to the second portion of channels;

a fifth parameter, characterizing a number of channels in the second portion of channels;

a sixth parameter, characterizing a proportion factor corresponding to the third portion of channels; or

a seventh parameter, characterizing a number of channels in the third portion of channels.

6. The method of claim 5, wherein

the number of channels in the first portion of channels is determined based on the first parameter and the second parameter; or

the number of channels in the first portion of channels is determined based on the third parameter.

7. The method of claim 5 or 6, wherein

the number of channels in the second portion of channels is determined based on the first parameter and the fourth parameter; or

the number of channels in the second portion of channels is determined based on the fifth parameter.

8. The method of any one of claims 5 to 7, wherein

the number of channels in the third portion of channels is determined based on the first parameter and the sixth parameter; or

the number of channels in the third portion of channels is determined based on the seventh parameter.

9. The method of any one of claims 3 to 8, wherein the first information comprises first indication information and/or second indication information; and wherein

the first indication information indicates that a starting channel in the first portion of channels is a channel with a lowest frequency among the channels deployed by the network, or that a starting channel in the first portion of channels is a channel with a highest frequency among the channels deployed by the network;

the second indication information indicates a channel index of the starting channel in the first portion of channels and/or whether the first portion of channels are continuous channels starting from the channel index to a high-frequency direction or to a low-frequency direction.

10. The method of claim 9, wherein a position of the starting channel in the first portion of channels is determined based on the first indication information and/or the second indication information.

11. The method of any one of claims 3 to 10, wherein the first information comprises third indication information and/or fourth indication information, and wherein

the third indication information indicates that a starting channel in the second portion of channels is a channel with a highest frequency among the channels deployed by the network, or that a starting channel in the second portion of channels is a channel with a lowest frequency among the channels deployed by the network;

the fourth indication information indicates a channel index of the starting channel in the second portion of channels and/or whether the first portion of channels are continuous channels starting from the channel index to a high-frequency direction or to a low-frequency direction.

12. The method of claim 11, wherein a position of the starting channel in the second portion of channels is determined based on the third indication information and/or the fourth indication information.

13. The method of any one of claims 3 to 12, wherein the third portion of channels are located between the first portion of channels and the second portion of channels.

14. The method of any one of claims 3 to 13, wherein at least part of the first information is agreed in a protocol, and/or at least part of the first information is determined based on an operating spectrum of the terminal device, and/or at least part of the first information is configured by a downlink signal from the network device.

15. The method of any one of claims 2 to 14, further comprising:
selecting, by the terminal device, the channel for transmitting the second signal among the first portion of channels.

16. The method of claim 1, wherein the first constraint comprises that: the channel in which the second signal is located is a channel, other than a fourth portion of channels, among the channels deployed by the network, and/or the channel in which the second signal is located is a channel in a fifth portion of channels among the channels deployed by the network.

17. The method of claim 16, wherein the fourth portion of channels are channels used by the network device for next one or more downlink transmissions after the first signal has been transmitted.

18. The method of claim 16, wherein the fourth portion of channels are channels that are not allowed to be used by the terminal device, and the fifth portion of channels are channels that are allowed to be used by the terminal device.

19. The method of any one of claims 16 to 18, wherein the first signal carries second information and/or third information, the second information indicating the fourth portion of channels, and the third information indicating the fifth portion of channels.

20. The method of any one of claims 16 to 19, further comprising:

   selecting, by the terminal device, the channel for transmitting the second signal from channels, other than the fourth portion of channels, among the channels deployed by the network; and/or selecting, by the terminal device, the channel for transmitting the second signal from the fifth portion of channels among the channels deployed by the network.

21. The method of any one of claims 1 to 20, wherein the second constraint comprises that: the time domain position in which the second signal is located does not overlap with a first time domain position, or the time domain position in which the second signal is located does not fall within a first time window.

22. The method of claim 21, wherein the first time domain position is a time domain position used by the network device for next one or more downlink transmissions after the first signal has been transmitted.

23. The method of claim 21 or 22, wherein the first signal carries fourth information for indicating the first time domain position or indicating a time interval between the first time domain position and a time domain position in which the first signal is located.

24. The method of any one of claims 21 to 23, wherein

   a starting time of the first time window is determined based on the first time domain position and a first duration; and/or an ending time of the first time window is determined based on the first time domain position and a second duration.

25. The method of claim 24, wherein the first signal carries fifth information for indicating at least one of: the starting time of the first time window, the ending time of the first time window, or a duration of the first time window.

26. The method of claim 24, wherein the first signal carries sixth information for indicating at least one of:

   the first duration between the starting time of the first time window and the first time domain position; or
   the second duration between the ending time of the first time window and the first time domain position.

27. The method of any one of claims 21 to 26, further comprising:
selecting, by the terminal device, a time domain position outside of the first time domain position or the first time window as the time domain position for transmitting the second signal.

28. The method of any one of claims 1 to 27, further comprising:

   when a time domain position selected by the terminal device for the second signal does not satisfy the second constraint, selecting, by the terminal device, a channel satisfying the first constraint for the second signal;
   when the time domain position selected by the terminal device for the second signal satisfies the second constraint, randomly selecting, by the terminal device, a channel among the channels deployed by the network as the channel for transmitting the second signal.

29. The method of any one of claims 1 to 27, further comprising:

   when a channel selected by the terminal device for the second signal does not satisfy the first constraint, selecting, by the terminal device, a time domain position satisfying the second constraint for the second signal;
   when the channel selected by the terminal device for the second signal satisfies the first constraint, randomly selecting, by the terminal device, a time domain position as the time domain position for transmitting the second signal.

30. A communication method, comprising:

   transmitting, by a network device, a first signal to a terminal device; and
   receiving a second signal from the terminal device, the second signal being a backscattered signal of the first signal,
   wherein a channel in which the second signal is located satisfies a first constraint, and/or a time domain position in which the second signal is located satisfies a second constraint.

31. The method of claim 30, wherein the first constraint comprises that: the channel in which the second signal is located is a channel in a first portion of channels, and the first portion of channels are channels for uplink transmission among channels deployed by a network.

32. The method of claim 31, wherein the first portion of channels and/or a second portion of channels and/or a third portion of channels are determined based on first information, wherein the second portion of channels are channels for downlink transmission among the channels deployed by the network, and the third portion of channels are channels for uplink-downlink guard intervals among the channels deployed by the network.

33. The method of claim 32, wherein the first information is used for determining at least one of:

a number of channels in the first portion of channels;
a position of a starting channel in the first portion of channels;
a number of channels in the second portion of channels;
a position of a starting channel in the second portion of channels; or
a number of channels in the third portion of channels.

34. The method of claim 32 or 33, wherein the first information comprises at least one of the following parameters:

a first parameter, characterizing a number of channels deployed by the network;
a second parameter, characterizing a proportion factor corresponding to the first portion of channels;
a third parameter, characterizing a number of channels in the first portion of channels;
a fourth parameter, characterizing a proportion factor corresponding to the second portion of channels;
a fifth parameter, characterizing a number of channels in the second portion of channels;
a sixth parameter, characterizing a proportion factor corresponding to the third portion of channels; or
a seventh parameter, characterizing a number of channels in the third portion of channels.

35. The method of claim 34, wherein

the number of channels in the first portion of channels is determined based on the first parameter and the second parameter; or

the number of channels in the first portion of channels is determined based on the third parameter.

36. The method of claim 34 or 35, wherein

the number of channels in the second portion of channels is determined based on the first parameter and the fourth parameter; or
the number of channels in the second portion of channels is determined based on the fifth parameter.

37. The method of any one of claims 34 to 36, wherein

the number of channels in the third portion of channels is determined based on the first parameter and the sixth parameter; or
the number of channels in the third portion of channels is determined based on the seventh parameter.

38. The method of any one of claims 32 to 37, wherein the first information comprises first indication information and/or second indication information, and wherein

the first indication information indicates that a starting channel in the first portion of channels is a channel with a lowest frequency among the channels deployed by the network, or that a starting channel in the first portion of channels is a channel with a highest frequency among the channels deployed by the network;
the second indication information indicates a channel index of the starting channel in the first portion of channels and/or whether the first portion of channels are continuous channels starting from the channel index to a high-frequency direction or to a low-frequency direction.

39. The method of claim 38, wherein a position of the starting channel in the first portion of channels is determined based on the first indication information and/or the second indication information.

40. The method of any one of claims 32 to 39, wherein the first information comprises third indication information and/or fourth indication information, and wherein

the third indication information indicates that a starting channel in the second portion of channels is a channel with a highest frequency among the channels deployed by the network, or that a starting channel in the second portion of channels is a channel with a lowest frequency among the channels deployed by the network;

the fourth indication information indicates a channel index of the starting channel in the second portion of channels and/or whether the first portion of channels are continuous channels starting from the channel index to a high-frequency direction or to a low-frequency direction.

41. The method of claim 40, wherein a position of the starting channel in the second portion of channels is determined based on the third indication information and/or the fourth indication information.

42. The method of any one of claims 32 to 41, wherein the third portion of channels are located between the first portion of channels and the second portion of channels.

43. The method of any one of claims 32 to 42, wherein at least part of the first information is agreed in a protocol, and/or at least part of the first information is determined based on an operating spectrum of the terminal device, and/or at least part of the first information is configured by a downlink signal from the network device.

44. The method of claim 30, wherein the first constraint comprises that: the channel in which the second signal is located is a channel, other than a fourth portion of channels, among the channels deployed by the network, and/or the channel in which the second signal is located is a channel in a fifth portion of channels among the channels deployed by the network.

45. The method of claim 44, wherein the fourth portion of channels are channels used by the network device for next one or more downlink transmissions after the first signal has been transmitted.

46. The method of claim 44, wherein the fourth portion of channels are channels that are not allowed to be used by the terminal device, and the fifth portion of channels are channels that are allowed to be used by the terminal device.

47. The method of any one of claims 44 to 46, wherein the first signal carries second information and/or third information, the second information indicating the fourth portion of channels, and the third information indicating the fifth portion of channels.

48. The method of any one of claims 30 to 47, wherein the second constraint comprises that: the time domain position in which the second signal is located does not overlap with a first time domain position, or the time domain position in which the second signal is located does not fall within a first time window.

49. The method of claim 48, wherein the first time domain position is a time domain position used by the network device for next one or more downlink transmissions after the first signal has been transmitted.

50. The method of claim 48 or 49, wherein the first signal carries fourth information for indicating the first time domain position or indicating a time interval between the first time domain position and a time domain position in which the first signal is located.

51. The method of any one of claims 48 to 50, wherein

a starting time of the first time window is determined based on the first time domain position and a first duration; and/or
an ending time of the first time window is determined based on the first time domain position and a second duration.

52. The method of claim 51, wherein the first signal carries fifth information for indicating at least one of: the starting time of the first time window, the ending time of the first time window, or a duration of the first time window.

53. The method of claim 51, wherein the first signal carries sixth information for indicating at least one of:

the first duration between the starting time of the first time window and the first time domain position; or
the second duration between the ending time of the first time window and the first time domain position.

54. A communication apparatus, applied to a terminal device in a zero-power communication system, the apparatus comprising:

a receiving unit, configured to receive a first signal from a network device; and
a transmitting unit, configured to transmit a second signal to the network device, the second signal being a backscattered signal of the first signal, wherein
a channel in which the second signal is located satisfies a first constraint, and/or a time domain position in which the second signal is located satisfies a second constraint.

55. A communication apparatus, applied to a network device in a zero-power communication system, the apparatus comprising:

a transmitting unit, configured to transmit a first signal to a terminal device; and
a receiving unit, configured to receive a second signal from the terminal device, the second signal being a backscattered signal of the first signal, wherein

a channel in which the second signal is located satisfies a first constraint, and/or a time domain position in which the second signal is located satisfies a second constraint.

56. A terminal device, comprising a processor and a memory for storing a computer program, wherein the processor is configured to call the computer program stored in the memory and run the computer program to execute the method of any one of claims 1 to 29.

57. A network device, comprising a processor and a memory for storing a computer program, wherein the processor is configured to call the computer program stored in the memory and run the computer program to execute the method of any one of claims 30 to 53.

58. A chip, comprising a processor configured to call a computer program from a memory and run the computer program to cause a device mounted with the chip to perform the method of any one of claims 1 to 29, or cause a device mounted with the chip to perform the method of any one of claims 30 to 53.

59. A computer-readable storage medium having stored thereon a computer program, wherein the computer program enables a computer to perform the method of any one of claims 1 to 29, or to perform the method of any one of claims 30 to 53.

60. A computer program product comprising computer program instructions, wherein the computer program instructions enable a computer to perform the method of any one of claims 1 to 29, or to perform the method of any one of claims 30 to 53.

61. A computer program, wherein the computer program enables a computer to perform the method of any one of claims 1 to 29, or to perform the method of any one of claims 30 to 53.

EP 4 654 492 A1

Power sourcing/Trigger

| Power harvesting module | Backscattering communication module | Low-power computing module | Sensor |

Backscattering communication

Network device

Zero-power terminal

**FIG. 1**

**FIG. 2**

**FIG. 3**

**FIG. 4**

1 0 1 1 0 0 1 0 1 0 0 1 0 1 1

**FIG. 5**

1 0 1 1 0 0 1 0 1 0 0 1 0 1 1

**FIG. 6**

1 0 1 1 0 0 1 0 1 0 0 1 0 1 1

**FIG. 7**

1 0 1 1 0 0 1 0 1 0 0 1 0 1 1

**FIG. 8**

1 0 1 1 0 0 1 0 1 0 0 1 0 1 1

**FIG. 9**

| | |
|---|---|
| | CH(n+2) |
| | CH(n+1) |
| | CHn |
| | ⋮ |
| | CH4 |
| | CH3 |
| | CH2 |
| Power sourcing signal | CH1 |

**FIG. 10**

| | |
|---|---|
| | CH(n+2) |
| | CH(n+1) |
| | CHn |
| | ⋮ |
| | CH4 |
| | CH3 |
| | CH2 |
| Power sourcing signal | CH1 |

Reception
Interference
Transmission

**FIG. 11**

A network device transmits a first signal to a terminal device, and the terminal device receives the first signal from the network device `1201`

The terminal device transmits a second signal to the network device, and the network device receives the second signal from the terminal device, the second signal being a backscattered signal of the first signal, a channel in which the second signal is located satisfies a first constraint, and/or a time domain position in which the second signal is located satisfies a second constraint `1202`

**FIG. 12**

| For transmission of uplink signal | CH19 |
| | CH18 |
| | ⋮ |
| | CH7 |
| | CH6 |
| | CH5 |
| For transmission of downlink signal | CH4 |
| | CH3 |
| | CH2 |
| | CH1 |
| | CH0 |

**FIG. 13**

**FIG. 14**

**FIG. 15**

Communication apparatus

Receiving unit 1601

Transmitting unit
1602

**FIG. 16**

Communication apparatus

Transmitting unit
1701

Receiving unit 1702

**FIG. 17**

Communication device 1800

Memory
1820

Processor
1810

Transceiver
1830

**FIG. 18**

Chip 1900

Input
interface
1930

Processor
1910

Memory
1920

Output
interface
1940

**FIG. 19**

Communication system 2000

Terminal
device
2010

Network
device
2020

**FIG. 20**

## INTERNATIONAL SEARCH REPORT

| | |
|---|---|
| International application No. | |
| | **PCT/CN2023/073372** |

**A.    CLASSIFICATION OF SUBJECT MATTER**

H04B7/22(2006.01)i;  H04W72/00(2023.01)i

According to International Patent Classification (IPC) or to both national classification and IPC

**B.    FIELDS SEARCHED**

Minimum documentation searched (classification system followed by classification symbols)

IPC:H04B, H04W

Documentation searched other than minimum documentation to the extent that such documents are included in the fields searched

Electronic data base consulted during the international search (name of data base and, where practicable, search terms used)

CNABS: CNTXT; CNKI; VEN; WOTXT; EPTXT; USTXT: 反向散射, 信道, 约束, 条件, 时域, 频域, 偏移, 重叠, 上行资源, 上行信道, 时间窗口, back scattering, channel, restriction, condition, time domain, frequency domain, offset, overlap, uplink resource, uplink channel, time window

**C.    DOCUMENTS CONSIDERED TO BE RELEVANT**

| Category* | Citation of document, with indication, where appropriate, of the relevant passages | Relevant to claim No. |
|---|---|---|
| X | WO 2023279236 A1 (GUANGDONG OPPO MOBILE TELECOMMUNICATIONS CORP., LTD.) 12 January 2023 (2023-01-12)<br>description, page 10, lines 44-49, page 13, lines 18-22, and claims 117-131 | 1-61 |
| X | CN 110100464 A (THE BOARD OF TRUSTEES OF THE LELAND STANFORD JUNIOR UNIVERSITY) 06 August 2019 (2019-08-06)<br>claim 1, and description, paragraphs [0060]-[0061] | 1-61 |
| A | CN 114389648 A (VIVO MOBILE COMMUNICATION CO., LTD.) 22 April 2022 (2022-04-22)<br>entire document | 1-61 |
| A | US 10763990 B1 (VOUGIOUKAS Georgios et al.) 01 September 2020 (2020-09-01)<br>entire document | 1-61 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 September 2023** | **28 September 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/073372**

| Patent document cited in search report | | | Publication date (day/month/year) | Patent family member(s) | | | Publication date (day/month/year) |
|---|---|---|---|---|---|---|---|
| WO | 2023279236 | A1 | 12 January 2023 | None | | | |
| CN | 110100464 | A | 06 August 2019 | US | 2023103390 | A1 | 06 April 2023 |
| | | | | EP | 3532981 | A1 | 04 September 2019 |
| | | | | EP | 3532981 | A4 | 24 June 2020 |
| | | | | US | 2019274144 | A1 | 05 September 2019 |
| | | | | US | 11483836 | B2 | 25 October 2022 |
| | | | | KR | 20190075093 | A | 28 June 2019 |
| | | | | WO | 2018081319 | A1 | 03 May 2018 |
| | | | | CA | 3041667 | A1 | 03 May 2018 |
| | | | | JP | 2020509618 | A | 26 March 2020 |
| CN | 114389648 | A | 22 April 2022 | WO | 2022083620 | A1 | 28 April 2022 |
| US | 10763990 | B1 | 01 September 2020 | None | | | |

Form PCT/ISA/210 (patent family annex) (July 2022)